Europäisches Patentamt

European Patent Office

Office européen des brevets

(11) Publication number: **0 137 607**
A1

(12) # EUROPEAN PATENT APPLICATION

(21) Application number: 84305157.4

(22) Date of filing: 30.07.84

(51) Int. Cl.⁴: **H 02 J 15/00**

(30) Priority: 30.07.83 GB 8320598

(43) Date of publication of application:
17.04.85 Bulletin 85/16

(84) Designated Contracting States:
AT BE CH DE FR GB IT LI LU NL SE

(71) Applicant: Bowler, Peter
Greenacres Gawsworth Road
Gawsworth Macclesfield(GB)

(72) Inventor: Bowler, Peter
Greenacres Gawsworth Road
Gawsworth Macclesfield(GB)

(74) Representative: McNeight, David Leslie
McNeight & Lawrence Regent House Heaton Lane
Stockport Cheshire SK4 1BS(GB)

(54) **Electrically supplying intermittent loads.**

(57) Intermittent electrical loads (11) are supplied with high peak power from a rotating DC machine (12) with a flywheel effect arranged in parallel to a supply (13) so that during periods of no or low demand from the load the DC machine (12) stores rotary energy and during peakk demand periods the rotary energy is converted into electrical energy which is supplied to the load.

FIG.1

EP 0 137 607 A1

## ELECTRICALLY SUPPLYING INTERMITTENT LOADS

This invention relates to electrically supplying intermittent loads.

Problems arise when intermittent loads with high peak power demands but relatively low mean power requirements are to be supplied from a source which is not stiff enough to give the peak power without a large voltage drop. Capacitor banks are used to supply intermittent loads such as servomotors, X-ray machines and plasma arcs, but since the capacity required is of the order of 1 Farad, they are necessarily very bulky and expensive.

The present invention provides a more compact and less expensive arrangement.

The invention comprises an arrangement for electrically supplying intermittent loads with high peak power comprising a rotating DC machine with a flywheel effect arranged in parallel to a supply so that during periods of no or low demand from the load, the DC machine stores rotary energy, and during peak demand periods the rotary energy is converted into electrical energy which is supplied to the load.

The arrangement may advantageously be such that the DC machine is capable of delivering peaks of power to the load but absorbs power from the supply at a low rate.

Control means may be provided controlling the rate at which the DC machine absorbs power from the supply. Said control means may comprise a DC-DC converter or an AC-DC converter.

The arrangement may comprise a smoothing capacitor in parallel with the load, and may comprise a series inductance shunt capacitor filter.

The armature resistance of the DC machine is preferably low so that the regulation of the DC machine is substantially better than that of the supply.

Embodiments of arrangements according to the invention will now be described with reference to the accompanying drawings in which:

Figure 1    is a diagram of a velocity or servo position control system,

Figure 1A    is a diagram showing a typical duty cycle for the servo of Figure 1,

Figure 2    is a diagram of an X-ray generator
            system,

Figure 2A   is a diagram showing a typical duty
            cycle for the X-ray generator of
            Figure 2,

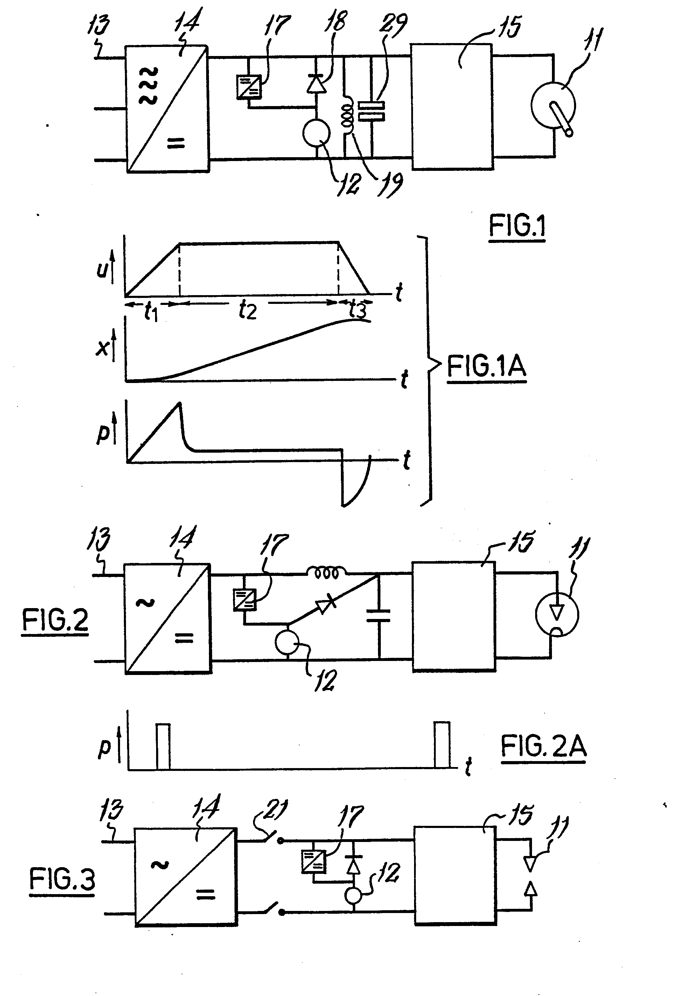

and    Figure 3    is a diagram of a plasma arc system.

The drawings illustrate arrangements for electrically supplying intermittent loads 11 with high peak power comprising a rotary DC machine 12 with a flywheel effect arranged in parallel to a supply 13 so that during periods of no or low demand from the load, the DC machine 12 stores rotary energy, and during peak demand periods the rotary energy is converted into electrical energy which is supplied to the load.

The load in Figure 1 is a servo motor 11 typically a 100 Volt, 500 Amp machine supplied from a three phase supply 13 through a recitifier 14. A pulse width modulated controller 15 controls the servo motor, which requires high peak power for relatively short intervals as shown in Figure 1A, which shows velocity U, position X, and power P plotted against time. Time $t_1$ during which the servo is accelerating from rest is typically 0.25 seconds and the power demand during this period is 50KW. Having got up to speed, the power requirement during the constant speed part of the motion is only enough to overcome frictional forces - the time $t_2$ for this part of the motion is typically 1 second. The deceleration period $t_3$ is typically 0.2 seconds. During this period, the load has a negative power requirement.

The peak power requirement of 50KW would cause the voltage of the three phase supply normally available to droop significantly, impairing the performance of the servo.

In the arrangement illustrated in Figure 1, peak demand is supplied from a DC machine 12 having a flywheel. The DC machine 12 is supplied through a DC-DC converter 17 taking its power from the rectifier 14. A diode 18 allows the machine 12 to supply power to the system directly. As shown, a field winding 19 is also energised by the arrangement, but the machine 15 could equally be a permanent magnet machine. A smoothing capacitor 29 is placed across the load.

A flywheel having a moment of inertia of 0.15 $Kgm^2$ rotating at 6000 rpm can deliver 50KW for 0.25 seconds with a drop in revolutions to 5000 rpm.

0137607

During time $t_3$, the negative power requirement of the servo can be used to drive the flywheel back up to speed, though losses are inevitable and will have to be made up from the supply. If there is - as would be typical - a four second interval before the next peak demand for another movement of the servo, the flywheel will have ample time to accelerate back to 6000 rpm without causing the supply voltage to droop unacceptably.

Figure 2 shows an arrangement for supplying peak power requirements to an X-ray generator 11. The source this time is a single phase supply 13. The X-ray generator 11 has a typical duty cycle as shown in Figure 2A where it consumes in a 100 millisecond pulse with a 10 second cycle time. Here, a flywheel having a moment of inertia of 0.25 Kg $m^2$ running at 7000 rpm would drop to 6740 rpm during the power pulse. The circuit includes a series inductance shunt capacitor filter.

Figure 3 illustrates an arrangement where the load 11 is a plasma arc controlled by a pulse width modulated controller 15. Again, the supply is single phase, rectified. A DC to DC converter 17 is shown supplying run-up power to the DC machine 12, although this is optional if the machine 12 is matched to the rectifier 14. If the plasma arc is not required to cycle, but merely to operate on demand, the switch 21 is included to initiate running up the flywheel.

Typically, a plasma arc operates at 100 Volts, 500 Amps.

To supply the peak power requirements of the equipment referred to would require a capacitor bank, if done in the conventional way, having a capacitance of the order of 1 Farad, which occupies a considerable volume, such as could not be accommodated, for example, in a military vehicle for operating a gun turret, where there is in addition, the problem of the power supp,ly not being stiff enough.

## CLAIMS

1.    An arrangement for electrically supplying intermittent loads with high peak power comprising a rotating DC machine with a flywheel effect arranged in parallel to a suply so that during periods of no or low demand from the load, the DC machine stores rotary energy, and during peak demand periods the rotary energy is converted into electrical energy which is supplied to the load.

2.    An arrangement according to claim 1, in which the DC machine is capable of delivering peaks of power to the load but absorbs power from the supply at a low rate.

3.    An arrangement according to claim 1 or claim 2, comprising control means controlling the rate at which the DC machine absorbs power from the supply.

4.    An arrangement according to claim 3, in which said control means comprise a DC-DC converter.

5.    An arrangement according to claim 3, in which said control means comprise an AC-DC converter.

6.      An arrangement according to any one of claims 1 to 5, comprising a smoothing capacitor in parallel with the load.

7.      An arrangement according to any one of claims 1 to 6, comprising a series inductance shunt capacitor filter.

8.      An arrangement according to any one of claims 1 to 7, in which the armature resistance of the DC machine is low so that the regulation of the DC machine is substantially better than that of the supply.

9.      An arrangement substantially as hereinbefore described with reference to the accompanying drawings.

10.      An arrangement according to any one of claims 1 to 10, in which the load comprises a servo system.

11.      An arrangement according to any one of claims 1 to 10, in which the load comprises an X-ray machine.

12.      An arrangement according to any one of claims 1 to 10, in which the load comprises a plasma arc.

0137607

1/1

FIG.1

FIG.1A

FIG.2

FIG.2A

FIG.3

0137607
. Application number
EP   84 30 5157

# EUROPEAN SEARCH REPORT

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | MESURES, REGULATION, AUTOMATISME, vol. 45, no. 2, February 1980, Paris, France; "Le stockage d'énergie par accumulateurs cinétiques grâce aux paliers magnétiques", pages 77, 79 <br> * Complete document * | 1,2 | H 02 J   15/00 |
| | --- | | |
| X | PATENT ABSTRACTS OF JAPAN, vol. 4, no. 10, 25th January 1980, page 103 E167; & JP-A-54-150642 (TOKYOSHIBAURA DENKI K.K.) 27-11-1979 <br> * Abstract * | 1 | |
| | --- | | |
| A | FR-A-2 481 855   (J.K. GRADY) <br> * Claim 1; figures 1, 2 * | 1,11 | |
| | --- | | **TECHNICAL FIELDS SEARCHED (Int. Cl.4)** |
| A | PATENT ABSTRACTS OF JAPAN, vol. 2, no. 150, 15th December 1978, page 9599 E78; & JP-A-53-118723 (TOKYO SHIBAURA DENKI K.K.) 17-10-1978 | 1 | H 02 J   15/00 <br> H 02 M    9/00 |
| | --- | | |
| A | DE-U-8 203 293   (SIEMENS AG.) | | |
| | ----- | | |

The present search report has been drawn up for all claims

| Place of search <br> BERLIN | Date of completion of the search <br> 29-10-1984 | Examiner <br> FAORO G |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82